# EUROPÄISCHE PATENTSCHRIFT

(11) **EP 0 565 898 B1**
(45) Veröffentlichungstag und Bekanntmachung des Hinweises auf die Patenterteilung: **14.02.1996**
(21) Anmeldenummer: 93104461.4
(22) Anmeldetag: 18.03.1993
(51) Int. Cl.: B01D 29/11, E02B 8/02, E03F 5/14, B03B 5/52, B03B 11/00

(54) **Vorrichtung zum Abscheiden von Feststoffen aus einer Flüssigkeit mit einer zylindermantelförmigen, flüssigkeitsdurchlässigen Abscheidefläche und zum Entfernen des Abscheidegutes**
Device for separating solid matter from a liquid with a cylindrical liquid permeable separating surface and for removing solid matter
Dispositif pour séparer des produits solides d'un liquide avec une surface de séparation cylindrique, perméable à ces liquides et pour l'enlèvement des produits solides

(30) Priorität: 07.04.1992 DE 4211606
(43) Veröffentlichungstag der Anmeldung: 20.10.1993
(73) Patentinhaber: Huber, Hans Georg, D-92334 Berching (DE)
(72) Erfinder: Huber, Hans Georg, D-92334 Berching (DE)
(74) Vertreter: Rehberg, Elmar, Dipl.-Ing.

(56) Entgegenhaltungen:
- EP-A- 0 293 515
- EP-A- 0 367 037
- DE-A- 3 941 673
- DE-U- 9 100 126

## Beschreibung

Die Erfindung bezieht sich auf eine Vorrichtung zum Entfernen von Abscheidegut aus einer Flüssigkeit mit einer zylindermantelförmigen, flüssigkeitsdurchlässigen Abscheidefläche, die zur Ablagerung des Abscheideguts auf ihrer Innenseite anströmseitig auf einem Teil des Umfangs offen ausgebildet ist, und mit einer parallel zur Abscheidefläche angeordneten, zur Abwurfstelle des Abscheideguts führenden, als Schneckenfördereinrichtung mit Gehäuse, Welle und Förderwendel ausgebildeten Förderstrecke für das Abscheidegut, wobei die Förderwendel an der Abscheidefläche entlangstreichend das Abscheidegut abnimmt, nach oben fördert und so die Abscheidefläche immer wieder reinigt sowie am oberen Ende der Förderstrecke eine Kompaktierzone für das Abscheidegut gebildet ist. Diese Vorrichtung kann insbesondere in Kläranlagen eingesetzt werden, ist jedoch auch vorteilhaft für andere Bereiche der Technik verwendbar, beispielsweise der Textilindustrie, der Kunststoffindustrie, in Schlachthöfen u. dgl., und zwar immer dann, wenn ein Abscheidegut in mehr oder weniger fester Form aus einer Flüssigkeit, insbesondere Wasser, herausgeholt werden soll. Bei dem Abscheidegut kann es sich um Rechen- und/oder Siebgut handeln, also um Gut, welches auch relativ grobstückig anfällt. Andererseits kann das Abscheidegut aber auch eine relativ feine Konsistenz aufweisen, wie beispielsweise ein Filtergut.

Eine Vorrichtung der eingangs beschriebenen Art zum Entfernen von Rechen- und/oder Siebgut aus in einem Gerinne strömender Flüssigkeit ist aus der DE-C-37 16 434 bekannt. Die Vorrichtung weist einen bis zur Sohle des Gerinnes reichenden, schräg aufwärts gerichteten, teilweise in die Flüssigkeit eintauchenden, zylindermantelförmigen Rost mit durchgehenden Roststäben und zwischen diesen gebildeten Längsspalten auf, der hier die Abscheidefläche bildet. An diese Abscheidefläche schließt nach oben eine als Schneckenfördereinrichtung mit Gehäuse, Welle und Förderwendel ausgebildete Förderstrecke für das Abscheidegut an. Die Abscheidung des Abscheideguts erfolgt an der inneren Oberfläche der Abscheidefläche, also auf der Seite, an der auch die Förderwendel immer wieder entlangstreicht. Die bekannte Vorrichtung wird in einem Gerinne, also in einem offenen System, eingesetzt. Da sich die Abwurfstelle oberhalb des Flüssigkeitsspiegels im Gerinne befindet, kann sich im Bereich der nach oben fördernden Förderstrecke kein Flüssigkeitsdruck aufbauen. Am Ende der Förderstrecke ist in einem Bereich, der frei von einer Förderwendel ist, eine Kompaktierzone gebildet, in welcher sich das Abscheidegut anreichert bzw. zu einem Pfropf zusammengepreßt wird, um noch weitere Flüssigkeit aus dem Abscheidegut herauszupressen. Das Abscheidegut gelangt dann an einer Abwurfstelle über eine Abwurfschurre aus dem Gehäuse der Förderstrecke heraus und wird beispielsweise in einen Container abgeworfen. Die bekannte Vorrichtung ist nur in einem offenen Kanalsystem anwendbar.

Es gibt jedoch auch Fälle, in denen ein geschlossenes Kanalsystem vorliegt, beispielsweise Rohrleitungen, die dem Transport der mit dem Abscheidegut verunreinigten Flüssigkeit dienen. In einem solchen geschlossenen Kanalsystem kann die Flüssigkeit auch unter Druck stehen, wobei hier insbesondere der Druck infolge eines Höhenunterschieds angesprochen ist. Ein solcher Druck liegt beispielsweise dann vor, wenn ein Sammelbecken an die Rohrleitung angeschlossen ist und der Flüssigkeitsspiegel in dem Sammelbecken höher ist als die Rohrleitung. In einem solchen geschlossenen Kanalsystem ist die Flüssigkeit ebenfalls durch Abscheidegut verschmutzt, welches in Form von Fett, Laub, Steinen oder sonstigen Stoffen vorliegen kann. Diese Abscheidegüter lagern sich auch in den Leitungen ab und können die Ursache für Betriebsstörungen nicht nur in den Leitungen, sondern auch in nachgeschalteten Anlagen, z. B. in einer Kläranlage, sein. Es entsteht somit das Reinigungsproblem.

Bisher ist es bekannt, das geschlossene Leitungssystem an der Stelle, an der die Reinigung erfolgen soll, mit einem Unterbrechungsschacht zu versehen, also das geschlossene System an dieser Stelle zu öffnen, und in den Unterbrechungsschacht eine Siebschnecke gemäß der DE-C-37 16 434 oder eine andere Reinigungseinrichtung einzusetzen. Nachteilig daran ist, daß an dieser Stelle das geschlossene System geöffnet wird, also in ein offenes System übergeht. Weiterhin ist der Bauaufwand, der durch den Unterbrechungsschacht verursacht wird, erheblich.

Die EP 0 367 037 A2 zeigt ein Verfahren zum Abtrennen und Entwässern von Abscheidegut aus einer Flüssigkeit sowie einen dabei zum Einsatz kommenden Preßschneckenseparator. Es ist eine angetriebene Förderwendel vorgesehen, die im Bereich einer Abscheidefläche abnehmenden Durchmesser aufweist und schließlich völlig verschwindet, während die Welle der Förderwendel durchgehend vorgesehen ist. Damit wird im Bereich der Abscheidefläche eine Aufdickung des Abscheidegutes erreicht, welches einen Pfropf bildet und die zum Entwässern notwendige Gegenkraft erbringt. Die Abwurfstelle für das Abscheidegut ist ansonsten offen ausgebildet. Es kann ein Ausstoßregler in Form eines Flacheisens vorgesehen sein.

Der Erfindung liegt die Aufgabe zugrunde, eine Vorrichtung der eingangs beschriebenen Art bereitzustellen, die in einem geschlossenen Kanalsystem einsetzbar ist, ohne daß das geschlossene Kanalsystem an der Einsatzstelle der Vorrichtung geöffnet werden müßte.

Erfindungsgemäß wird dies bei der Vorrichtung der eingangs beschriebenen Art dadurch erreicht, daß das Gehäuse der Schneckenfördereinrichtung auch die Abscheidefläche umschließt und anströmseitig mit einem Einlaufstutzen und abströmseitig mit einem Ablaufstutzen versehen ist, wobei die Stutzen mit Leitungen eines geschlossenen Kanalsystems verbindbar sind, und daß an der Stelle des Übergangs zwischen dem Ende der Kompaktierzone und einer an das Gehäuse anschließenden Abwurfschurre eine axial verschiebbar gelagerte Gegendruckplatte vorgesehen ist, so daß ein sich in der Kompaktierzone bildender Pfropf aus Abscheidegut beim Auftreten von Druck in der Flüssigkeit als Dichtmaterial für den Abschluß der Förderstrecke nach oben wirkt.

Das Gehäuse der Schneckenfördereinrichtung, welches bei der im Stand der Technik bekannten Vorrichtung oberhalb der Abscheidefläche endet, so daß die Abscheidefläche selbst frei in das Gerinne einragt, wird bei der neuen Vorrichtung nach unten verlängert, so daß es auch die Abscheidefläche bzw. den gesamten Abscheideort umschließt. Damit geht das Gehäuse über die gesamte Vorrichtung durch. Es weist im unteren Bereich einen Einlaufstutzen und einen Ablaufstutzen auf, die über entprechende Anschlußmittel, z. B. flanschförmige Verbindungen, mit den Leitungen des geschlossenen Kanalsystems verbindbar sind. Der Kanal, an den die Vorrichtung angeschlossen wird, kann insbesondere rechteckigen oder runden Querschnitt aufweisen. Am Ende der Kompaktierzone hinter dem Pfropf ist eine Gegendruckplatte vorgesehen, die axial verschiebbar gelagert ist. Diese Gegendruckplatte erbringt die Abdichtwirkung des somit flüssigkeitsdichten Pfropfs in der Kompaktierzone. Mit Hilfe dieser Gegendruckplatte ist es somit möglich, auf die Pfropfbildung, auf die Ausdehnung des Pfropfs und auf die Dichtheit des zusammengepreßten Abscheideguts im Bereich des Pfropfs Einfluß zu nehmen. Die Gegendruckplatte ist an der Übergangsstelle zwischen der Kompaktierzone und einer an das Gehäuse anschließenden Abwurfstelle vorgesehen. Die Gegendruckplatte versperrt damit - je nach ihrer axialen Einstellung - den Querschnitt am Übergang zwischen der Kompaktierzone und der Abwurfstelle mehr oder weniger, so daß diese Übergangsstelle mehr oder weniger zugehalten wird. Durch die axiale Verschiebbarkeit kann auch eine Anpassung an die Art des Abscheideguts erreicht werden. Die axial verschiebbare Gegendruckplatte kann zu Einstell- und/oder Verstellzwecken zusätzlich axial einstellbar und/oder verstellbar angeordnet sein.

In bevorzugter Ausführungsform ist die Gegendruckplatte als Konuskörper ausgebildet, der auf der durchgehenden Welle der Schneckenfördereinrichtung axial verschiebbar gelagert ist. Der Konuskörper füllt den Zwischenraum zwischen der Welle und dem Gehäuse der Schneckenfördereinrichtung aus und kann seinerseits über Dichtelemente auch bei verschiebbarer Lagerung gegenüber dem Gehäuse und der Welle abgedichtet sein. Im Bereich der Kompaktierzone ist die Welle der Schneckenfördereinrichtung ohne Förderwendel ausgebildet, so daß sich im Anschluß daran auch ein ungehinderter Verschiebeweg für die axiale Verstellung des Konuskörpers ergibt.

Nach oben wird der sich in der Kompaktierzone bildende Pfropf aus Abscheidegut beim Auftreten von Druck in der Flüssigkeit als Dichtelement genutzt, wobei es sich bei dieser Abdichtung nicht um einen hermetischen Abschluß handelt, da das Abscheidegut an dieser Stelle aus dem geschlossenen System herausgeführt werden muß. Außerdem tritt nicht in allen Fällen und zu allen Betriebszuständen auch ein Druck in der Flüssigkeit auf. Dies hängt von der Verlegung des Kanalsystems und von dem Flüssigkeitsstand in den Anschlußelementen, beispielsweise in einem vorgeschalteten Sammelbecken o. dgl., ab. Wenn jedoch ein solcher Druck in der Flüssigkeit auftritt, wird der Pfropf in der Kompaktierzone als ein solches, das Gehäuse nach oben abschließendes Dichtelement genutzt, während im bisherigen Stand der Technik die Kompaktierzone lediglich dazu diente, weitere Flüssigkeit aus dem Abscheidegut auszupressen.

Durch die neue Vorrichtung wird der Einbau von Unterbrechungsschächten entbehrlich, was eine erhebliche Kostenreduzierung bedeutet.

Die Gegendruckplatte bzw. der Konuskörper kann unabhängig von seiner axialen Verstellbarkeit axial federnd-nachgiebig gelagert sein, damit er bei auftretenden Hindernissen begrenzt ausweichen kann. Dies ist beispielsweise dann der Fall, wenn Steine oder ähnliches Festgut sich in dem Pfropf in der Kompaktierzone anreichern und ein federnd-nachgiebiges Ausweichen der Gegendruckplatte erfordern, damit sie in den Bereich der Abwurfschurre übertreten können. Damit dient die Gegendruckplatte mit ihrer federnd-nachgiebigen Lagerung gleichzeitig als Sicherheitselement.

Der flüssigkeitsdurchlässigen Abscheidefläche kann ein flächig ausgebildeter Regulierungskörper zugeordnet sein, der ortsveränderlich zur Abscheidefläche vorgesehen ist, um die Durchtrittsfläche der Abscheidefläche zu verändern und damit eine Durchsatzregulierung zu erreichen. Bei einigen Anwendungen tritt neben dem Problem der Reinigung der Flüssigkeit auch das Problem einer mengenmäßigen Regulierung, also einer Durchsatzregulierung, auf. Dies ist insbesondere dann der Fall, wenn mit Abscheidegut verunreinigte Flüssigkeit beispielsweise aus einem Regenrückhaltebecken mit eingeschränktem Durchsatz gezielt einer Kläranlage zugeführt werden soll. Es wird dann der Regulierungskörper vorgesehen, der relativ zu der flüssigkeitsdurchlässigen Abscheidefläche angeordnet und ortsveränderlich bewegbar ist, so daß bei einer Verschiebung des Regulierungskörpers relativ zur Abscheidefläche die freie Durchtrittsfläche der Abscheidefläche verändert, also vergrößert oder verkleinert wird.

Der Regulierungskörper kann eine geschlossene Fläche aufweisen, die die Abscheidefläche umgibt, wobei der Regulierungskörper relativ zur Abscheidefläche axial verstellbar gelagert ist. Der Regulierungskörper kann aus einem zylindermantelförmig gebogenen Blech bestehen, das mit geringem Abstand die Abscheidefläche außen umgibt.

Der Regulierungskörper ist zweckmäßig innerhalb des Ablaufstutzens vorgesehen, so daß eine sonstige gesonderte druckdichte Unterbringung des Regulierungskörpers nicht erforderlich ist. Er wird insoweit vom Gehäuse ebenfalls eingeschlossen, so daß die Druckdichtheit der Vorrichtung an dieser Stelle gegeben ist.

Der Einlaufstutzen umschließt zweckmäßig den offenen Teil des Umfangs der Abscheidefläche. Er schließt an das bis in diesen Bereich heruntergezogene Gehäuse der Vorrichtung an. Über das Gehäuse findet auch der unmittelbare Anschluß des Einlaufstutzens an den Ablaufstutzen statt, wobei hier die Abscheidefläche vorgesehen ist, durch die die Flüssigkeit hindurchtreten muß.

Die Abscheidefläche kann als Lochblech, als Spaltsieb oder auch als Filterfläche ausgebildet sein. Dies richtet sich nach der Art des Abscheideguts und dem jeweiligen Anwendungsfall, bei dem die Vorrichtung eingesetzt wird.

Die Erfindung wird anhand bevorzugter Ausführungsbeispiele weiter erläutert und beschrieben. Es zeigen:
- Figur 1: eine perspektivische Darstellung der gesamten Vorrichtung in einer ersten Ausführungsform,
- Figur 2: einen Schnitt im oberen Bereich der Vorrichtung und
- Figur 3: einen Schnitt im unteren Bereich der Vorrichtung anhand einer Weiterbildung.

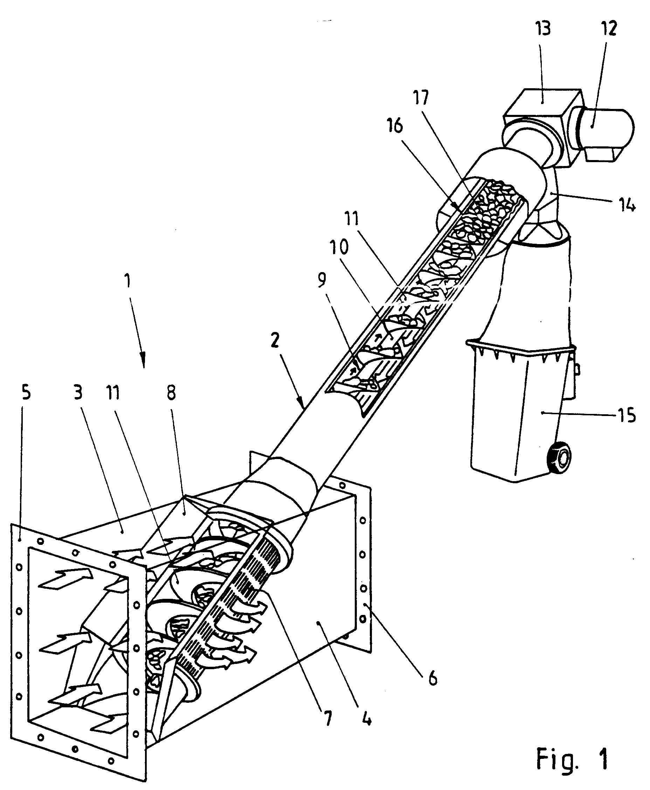

Die in Figur 1 dargestellte Vorrichtung 1 weist ein durchgehendes Gehäuse 2 auf, welches im oberen Teil rohrförmig und im unteren Teil kastenförmig ausgebildet ist. Der untere Teil des Gehäuses 2 bildet einen Einlaufstutzen 3 und einen Ablaufstutzen 4, die mit Flanschen 5 und 6 zum Anschluß einer Zu- und Ableitung versehen sind. An der Übergangsstelle vom Einlaufstutzen 3 zum Ablaufstutzen 4 befindet sich eine Abscheidefläche 7, also eine wasserdurchlässige Fläche, die in Form eines Lochsiebs, eines Spaltsiebs, als Rost, als perforierte Fläche oder auch als Filterfläche ausgebildet sein kann. Die Abscheidefläche 7 ist zylindermantelförmig ausgebildet und an der dem Einlaufstutzen 3 zugekehrten Seite offen gestaltet. Zu Abdichtzwecken gegenüber dem Gehäuse 2 können Trenn- und Übergangswände 8 vorgesehen sein. Im unteren Bereich können diese trichterförmig gestaltet sein.

In dem Gehäuse 2 und auch relativ zur Abscheidefläche 7 ist eine Schneckenfördereinrichtung 9 mit Welle 10 und Förderwendel 11 angeordnet. Im Bereich der Abscheidefläche 7 ist die Förderwendel 11 wellenlos gestaltet, um den hydraulischen Widerstand zu erniedrigen. Die Förderwendel 11 ist jedoch so gestaltet, daß sie im Bereich der Abscheidefläche 7 an dieser entlangstreicht und das Abscheidegut aufnimmt und nach oben fördert. Für den Antrieb der Welle 10 mit der Förderwendel 11 ist ein Motor 12 und ein Getriebe 13 vorgesehen, die mit dem oberen Ende der Welle 10 in Verbindung stehen. Im oberen Bereich der Schneckenfördereinrichtung 9 geht das Gehäuse 2 in eine Abwurfschurre 14 über, über die das Abscheidegut in einen Container 15 gelangt. Vor und im Bereich der an das Gehäuse 2 anschließenden Abwurfschurre 14 ist eine Kompaktierzone 16 gebildet, die zumindest teilweise förderwendelfrei ausgebildet ist. Die Förderwendel 11 kann beispielsweise nach oben abnehmende Steigung besitzen und dann in gewisser Entfernung von der Abwurfschurre 14 enden, während die Welle 10 durchgehend vorgesehen ist. In der Kompaktierzone 16 wird aus dem Abscheidegut ein Pfropf 17 gebildet, d. h. das Abscheidegut füllt den gesamten Querschnitt aus, wird zusammengepreßt und bildet damit eine Art Dichtung. Gleichzeitig wird das Abscheidegut beim Zusammendrücken zu dem Pfropf 17 entwässert. Je nach den Bedingungen des Rohrleitungssystems bzw. des Kanals, in welchen die Vorrichtung 1 eingebaut wird, kann es vorkommen, daß das gesamte Gehäuse 2 bis zum Pfropf 17 auch mit Flüssigkeit gefüllt ist, die zudem noch unter Druck stehen kann, wenn beispielsweise an die Rohrleitung ein Becken mit einem Wasserstand angeschlossen ist, der die Höhe des Pfropfs 17 überragt. Wenn die Vorrichtung für einen Anwendungsfall vorgesehen ist, bei welchem das Gehäuse 2 über den Pfropf 17 hinaus unter Druck stehen wird, ist es erforderlich, vor dem Ersteinbau einen Pfropf 17 zu bilden und auch während des sich nach dem Einbau anschließenden Betriebs der Vorrichtung 1 dafür zu sorgen, daß dieser Pfropf 17 - da er ein Dichtelement bildet - niemals verschwindet.

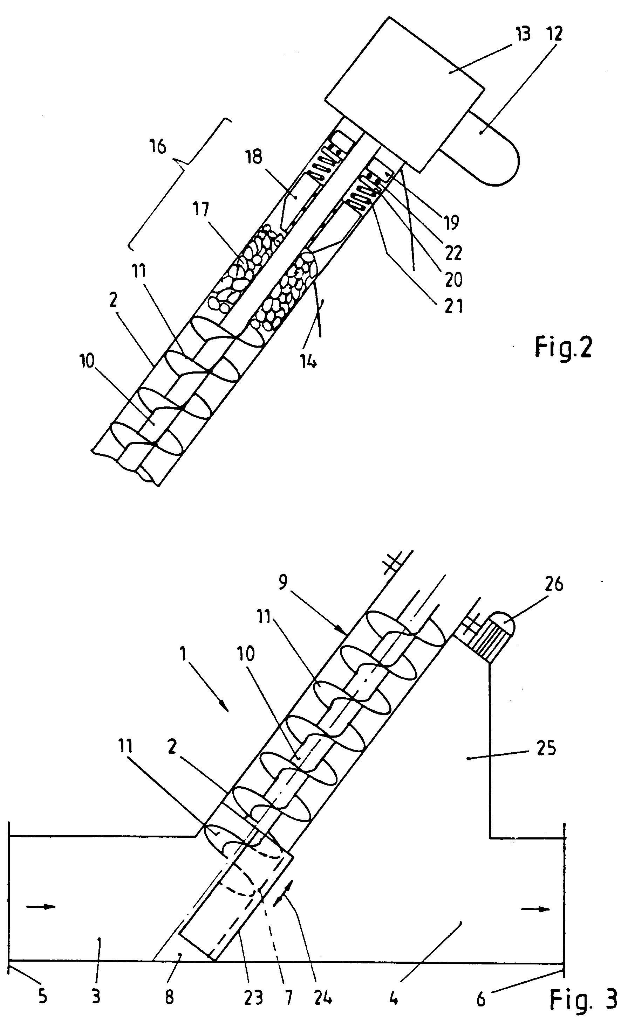

Figur 2 läßt erkennen, daß die Bildung des Pfropfs 17 durch eine Gegendruckplatte 18 verstärkt ist, die gegenüber der Welle 10 wie auch gegenüber dem Gehäuse 2 abgedichtet gelagert ist. Die Gegendruckplatte 18 ist zweckmäßig ortsfest angeordnet und umschließt die Welle 10. Die Gegendruckplatte 18 ist im Bereich der Abwurfschurre 14 gelagert und kann zweckmäßig in Richtung der Achse der Welle 10 verschiebbar oder verstellbar gelagert sein. Auch eine federnd-nachgiebige Lagerung, wie dargestellt, ist zweckmäßig. Hierzu ist eine Mutter 19 z. B. auf einem nicht dargestellten Gewinde auf der Welle 10 verdrehbar angeordnet. Auf der Mutter 19 stützt sich eine Stützscheibe 20 ab, die als Auflager für ein oder mehrere Federn 21 dient, über die die Gegendruckplatte 18 ausweichbar, also axial verschiebbar, gelagert ist. Zwischen Stützscheibe 20 und Mutter 19 kann eine Lagerung 22 vorgesehen sein, beispielsweise in Form eines Kugellagers, damit beim Verdrehen der Mutter 19 die Stützscheibe 20 nicht mitgedreht wird. Die Gegendruckplatte 18 kann so gelagert sein, daß sie sich in einer solchen Ausgangsstellung befindet, daß der Durchtrittsquerschnitt zur Abwurfschurre 14 abgeschlossen ist, wenn kein Pfropf 17 vorhanden ist. Es versteht sich, daß die Gegendruckplatte 18 beim Auftreten des Pfropfs axial in Richtung auf das Getriebe 13 ausweicht, so daß sich der Pfropf 17 dabei aufbauen kann und jeweils ein Teil des Pfropfs 17 in die Abwurfschurre 17 übertreten kann, wobei jedoch die Dichtfunktion des Pfropfs 17 nicht aufgehoben wird. Die Gegendruckplatte 18 kann als Konuskörper ausgebildet sein, um den Übergang des sich von dem Pfropf 17 lösenden Teils des Abscheideguts beim Übertritt in die Abwurfschurre 14 zu begünstigen.

Figur 3 verdeutlicht die Gestaltung der Vorrichtung 1 im unteren Bereich anhand einer besonderen Ausführungsform der Vorrichtung. Die zylindermantelförmige Abscheidefläche 7 ist hier von einem Regulierungskörper 23 umgeben, der ebenfalls zylindermantelförmig nach Art einer Halbschale ausgebildet ist und die Abscheidefläche 7 auf ihrer Außenseite abdeckt. Der Regulierungskörper 23 erfüllt damit eine Art Ventilfunktion zwischen dem Einlaufstutzen 3 und dem Ablaufstutzen 4. Der Regulierungskörper 23 ist in Richtung eines Doppelpfeils 24 parallel zur Achse der Welle 10 bzw. der Förderwendel 11 verschiebbar gelagert. Zu diesem Zweck ist das Gehäuse 2 in Verbindung mit dem betreffenden Teil des Ablaufstutzens 4 unter Bildung eines Aufnahmeraums 25 nach oben hochgezogen. In der vollständig geöffneten Stellung befindet sich der Regulierungskörper 23 im Aufnahmeraum 25, so daß die gesamte Fläche der Abscheidefläche 7 freigegeben ist. Für den Antrieb des Regulierungskörpers 23 ist ein Stellmotor 26 vorgesehen, der über eine nicht dargestellte Zahnstangenanlenkung oder eine sonstige getriebliche Verbindung an dem Regulierungskörper 23 angreift. Über nicht dargestellte Führungselemente wird die Bewegung des Regulierungskörpers 23 parallel zu der Achse der Schneckenfördereinrichtung 9 eingehalten. Der Regulierungskörper 23 kann als Blechschale ausgebildet sein. Die Anordnung elastischer Dichtelemente ist meist entbehrlich, da es im allgemeinen nur um eine Mengenregulierung geht und ein vollkommen dichtender Abschluß in vielen Fällen entbehrlich ist.

### Bezugszeichenliste:

- 1: = Vorrichtung
- 2: = Gehäuse
- 3: = Einlaufstutzen
- 4: = Ablaufstutzen
- 5: = Flansch
- 6: = Flansch
- 7: = Abscheidefläche
- 8: = Trenn- und Übergangswand
- 9: = Schneckenfördereinrichtung
- 10: = Welle
- 11: = Förderwendel
- 12: = Motor
- 13: = Getriebe
- 14: = Abwurfschurre
- 15: = Container
- 16: = Kompaktierzone
- 17: = Pfropf
- 18: = Gegendruckplatte
- 19: = Mutter
- 20: = Stützschraube
- 21: = Feder
- 22: = Lagerung
- 23: = Regulierungskörper
- 24: = Doppelpfeil
- 25: = Aufnahmeraum
- 26: = Stellmotor

## Patentansprüche

1. Vorrichtung (1) zum Entfernen von Abscheidegut aus einer Flüssigkeit mit einer zylindermantelförmigen, flüssigkeitsdurchlässigen Abscheidefläche (7), die zur Ablagerung des Abscheideguts auf ihrer Innenseite anströmseitig auf einem Teil des Umfangs offen ausgebildet ist, und mit einer parallel zur Abscheidefläche (7) angeordneten, zur Abwurfstelle des Abscheideguts führenden, als Schneckenfördereinrichtung (9) mit Gehäuse (2), Welle (10) und Förderwendel (11) ausgebildeten Förderstrecke für das Abscheidegut, wobei die Förderwendel (11) an der Abscheidefläche (7) entlangstreichend das Abscheidegut abnimmt, nach oben fördert und so die Abscheidefläche (7) immer wieder reinigt sowie am oberen Ende der Förderstrecke eine Kompaktierzone (16) für das Abscheidegut gebildet ist, **dadurch gekennzeichnet**, daß das Gehäuse (2) der Schneckenfördereinrichtung (9) auch die Abscheidefläche (7) umschließt und anströmseitig mit einem Einlaufstutzen (3) und abströmseitig mit einem Ablaufstutzen (4) versehen ist, wobei die Stutzen (3, 4) mit Leitungen eines geschlossenen Kanalsystems verbindbar sind, und daß an der Stelle des Übergangs zwischen dem Ende der Kompaktierzone (16) und einer an das Gehäuse (2) anschließenden Abwurfschurre (14) eine axial verschiebbar gelagerte Gegendruckplatte (18) vorgesehen ist, so daß ein sich in der Kompaktierzone (16) bildender Pfropf (17) aus Abscheidegut beim Auftreten von Druck in der Flüssigkeit als Dichtmaterial für den Abschluß der Förderstrecke nach oben wirkt.

2. Vorrichtung nach Anspruch 1, **dadurch gekennzeichnet**, daß die axial verschiebbare Gegendruckplatte (18) axial einstellbar und/oder verstellbar angeordnet ist.

3. Vorrichtung nach Anspruch 1 oder 2**, dadurch gekennzeichnet**, daß die Gegendruckplatte (18) als Konuskörper ausgebildet ist.

4. Vorrichtung nach einem der Ansprüche 1 bis 3, **dadurch gekennzeichnet**, daß die Gegendruckplatte (18) axial federnd-nachgiebig gelagert ist.

5. Vorrichtung nach Anspruch 1, **dadurch gekennzeichnet**, daß der flüssigkeitsdurchlässigen Abscheidefläche (7) ein flächig ausgebildeter Regulierungskörper (23) zugeordnet ist, der ortsveränderlich zur Abscheidefläche (7) vorgesehen ist, um die Durchtrittsfläche der Abscheidefläche (7) zu verändern und damit eine Durchsatzregulierung zu erzielen.

6. Vorrichtung nach Anspruch 5, **dadurch gekennzeichnet**, daß der Regulierungskörper (23) eine geschlossene Fläche aufweist, die die Abscheidefläche (7) umgibt, und daß der Regulierungskörper (23) relativ zur Abscheidefläche (7) axial verstellbar gelagert ist.

7. Vorrichtung nach Anspruch 5 oder 6, **dadurch gekennzeichnet**, daß der Regulierungskörper (23) innerhalb des Ablaufstutzens (4) vorgesehen ist.

8. Vorrichtung nach Anspruch 1, **dadurch gekennzeichnet**, daß der Einlaufstutzen (3) den offenen Teil des Umfangs der Abscheidefläche (7) umschließt.

9. Vorrichtung nach Anspruch 1, **dadurch gekennzeichnet**, daß die Abscheidefläche (7) als Lochblech, Spaltsieb oder Filterfläche ausgebildet ist.

## Claims

1. Device (1) for removing separated material from a liquid having a liquid permeable separating surface (7) which is shaped like a cylinder envelope and which is open over a part of its periphery on the inflow side for deposition of the separated material on its inside, and having a conveying line for the separated material which is arranged parallel to the separating surface (7), which leads to the discharge point for the separated material and which is constructed as a screw conveyor means (9) with housing (2), shaft (10) and conveyor helix (11), wherein the conveyor helix (11) takes off the separated material in scraping along the separating surface (7), conveys the separated material upwards and, thereby, cleans the separating surface repeatedly, and wherein a compacting zone (16) for the separated material is formed at the upper end of the conveying line, **characterized in that** the housing (2) of the screw conveyor means (9) also encloses the separating surface (7) and is provided with an inlet connection piece (3) on the inflow side and an outlet connection piece (4) on the outflow side, wherein the connection pieces are connectable to pipes of a closed sewer system, and in that, at the transition point between the end of the compacting zone (16) and a discharge chute (14) adjoining the housing (2), a counter pressure plate (18) is provided in an axially movable way, whereby a lump (17) of separated material building up in the compacting zone (16) acts as a sealing element for closing the conveying line in upward direction upon occurence of pressure in the liquid.

2. Device according to claim 1, **characterized in that** the axially movable counter pressure plate (18) is arranged in an axially adjustable and/or regulatable way.

3. Device according to claim 1 or 2, **characterized in that** the counter pressure plate (18) is constructed as a conical body.

4. Device according to one of the claims 1 to 3, **characterized in that** the counter pressure plate (18) is mounted in an axially resilient way.

5. Device according to claim 1, **characterized in that** an extensive regulating element (23) is allocated to the liquid permeable separating surface (7), the position of the regulating element relative to the separating surface (7) being changeable in order to alter the passage area of the separating surface (7) and, thereby, to achieve a regulation of the flow rate.

6. Device according to claim 5, **characterized in that** the regulating element (23) has a closed surface which surrounds the separating surface (7), and in that the regulating element (23) is mounted relative to the separating surface (7) in an axially shiftable way.

7. Device according to claim 5 or 6, **characterized in that** the regulating element (23) is provided within the outflow connection piece (4).

8. Device according to claim 1, **characterized in that** the inlet connection piece (3) encloses the open part of the separating surface (7) periphery.

9. Device according to claim 1, **characterized in that** the separating surface (7) is constructed as a perforated plate, a slotted-hole screen or a filter surface.

## Revendications

1. Dispositif (1) destiné à enlever des produits de séparation d'un liquide, comprenant une surface de séparation (7) en forme d'enveloppe cylindrique, perméable aux liquides, qui pour le dépôt des produits de séparation, sur sa face intérieure, côté amont, est ouvert sur une partie du pourtour, et un parcours de transport des produits de séparation, disposé parallèlement à la surface de séparation (7), menant aux points d'éjection des produits séparés, configuré en tant que dispositif de transport à vis sans fin (9) avec carter (2), arbre (10) et hélice de transport (11), l'hélice de transport (11) enlevant les produits de séparation en frottant le long de la surface de séparation (7), les transportant vers le haut et nettoyant ainsi toujours la surface de séparation (7) et une zone de compactage (6) pour les produits de séparation étant formée à l'extrémité supérieure du parcours de transport, caractérisé en ce que le carter (2) du dispositif de transport à vis sans fin (9) entoure aussi la surface de séparation (7) et est pourvu en amont d'une tubulure d'entrée (3) et en aval d'une tubulure d'évacuation (4), les tubulures (3, 4) pouvant être reliées à des conduites d'un système de canalisation fermée, et en ce qu'au point de la transition entre l'extrémité de la zone de compactage (16) et une goulotte de distribution (14) se raccordant au carter (2), il est prévu une contre-plaque de pression (18) montée coulissante, de sorte qu'un bouchon (17) de produits séparés, se formant dans la zone de compactage (16), sert de matériau d'étanchéité pour la fermeture du parcours de transport, lorsque se produit une pression dans le liquide

2. Dispositif selon la revendication 1, caractérisé en ce que la contre-plaque de pression (18) coulissant axialement, est placée axialement réglable et/ou ajustable.

3. Dispositif selon la revendication 1 ou 2, caractérisé en ce que la contre-plaque de pression (18) est configurée en tant que corps conique.

4. Dispositif selon l'une des revendications 1 à 3, caractérisé en ce que la contre-plaque de pression (18) est montée de manière à céder élastiquement axialement.

5. Dispositif selon la revendication 1, caractérisé en ce qu'à la surface de séparation (7) perméable aux liquides est associé un corps de régulation (23) plat, qui est prévu en des endroits différents par rapport à la surface de séparation (7), afin de faire varier la surface de passage de la surface de séparation (7) et d'obtenir ainsi une régulation du débit.

6. Dispositif selon la revendication 5, caractérisé en ce que le corps de régulation (23) présente une surface fermée, qui entoure la surface de séparation (7), et en ce que le corps de régulation (23) est monté axialement ajustable par rapport à la surface de séparation (7).

7. Dispositif selon la revendication 5 ou 6, caractérisé en ce que le corps de régulation (23) est prévu à l'intérieur de la tubulure d'évacuation (4).

8. Dispositif selon la revendication 1, caractérisé en ce que la tubulure d'entrée (3) entoure la partie ouverte du pourtour de la surface de séparation (7).

9. Dispositif selon la revendication 1, caractérisé en ce que la surface de séparation (7) est une tôle perforée, un tamis à fentes ou une surface de filtrage.
